# EUROPEAN PATENT SPECIFICATION

(11) **EP 1 856 579 B1**
(45) Date of publication and mention of the grant of the patent: **25.09.2013**
(21) Application number: 06716241.2
(22) Date of filing: 07.03.2006
(51) Int. Cl.: G03G 9/097, G03G 9/08, C08F 292/00, C08F 2/18, G03G 9/087, C08F 257/02, C08F 265/04, C08F 279/02, G03G 9/093, C08L 53/02, C08L 51/00, C08F 291/00

(54) **POLYMERIZED TONER WITH HIGH CHARGEABILITY AND GOOD CHARGE STABILITY AND PREPARATION METHOD THEREOF**
POLYMERISIERTER TONER MIT HOHER LADBARKEIT UND GUTER LADUNGSSTABILITÄT UND HERSTELLUNGSVERFAHREN DAFÜR
TONER POLYMERISE AYANT UNE HAUTE CAPACITE DE CHARGEMENT ET UNE BONNE STABILITE DE CHARGE ET PROCEDE DE FABRICATION CORRESPONDANT

(30) Priority: 08.03.2005 KR 20050019027
(43) Date of publication of application: 21.11.2007
(73) Proprietor: LG Chem, Ltd., Youngdungpo-gu, Seoul 150-721 (KR)
(72) Inventor: LEE, Woong-Ki 110-1508, lucky Hana apt., Daejeon-city 305-721 (KR); LEE, Chang-Soon 109-1603 Cheonggunarae apt., Daejeon-city 305-390 (KR); YOON, Tae-Hee 106-901 Dungji apt., Daejeon-city 302-732 (KR); JUNG, Woo-Cheul 937-15, Ulsan-city 680-010 (KR)
(74) Representative: HOFFMANN EITLE
(86) International application number: PCT/KR2006/000791
(87) International publication number: WO 2006/095995

(56) References cited:
- EP-A2- 1 193 564
- US-A- 5 229 242
- US-A- 5 462 829
- US-A- 5 506 083
- US-A- 5 573 881
- US-A- 5 843 612

## Description

### BACKGROUND OF THE INVENTION

### (a) Field of the Invention

The present invention relates to a polymerized toner with high chargeability and good charge-stability, and a method of preparing the polymerized toner. In particular, the present invention relates to a polymerized toner containing pigments, pigment stabilizers, charge control agents and a binder resin, and a method to prepare the polymerized toner by suspension polymerization of pigments, pigment stabilizers, charge control agents and binder resin monomers, wherein the pigment stabilizer is a styrene-butadiene-styrene block copolymer having the weight-average molecular weight of 2,000 to 200,000, and the charge control agent is a copolymer with sulfonate group having the weight-average molecular weight of 2,000 to 200,000.

In the present invention, the charge properties of the polymerized toner are improved by a combination of the pigment stabilizer and the charge control agent polymerized toner, to achieve the high chargeability and good charge-stability of the toner.

### (b) Description of the Related Art

Generally, a toner is used for electrophotography and electrostatic printer, copier, and the like, and means a pigment to develop image on the material to which the image is transferred. Recently, as the document is typically made out with a computer, there is a great demand for image-forming device such as printer rapidly. Accordingly, the amount of a toner used is increasing also.

Usually, a coloring particle which is prepared by dispersing colorant such as carbon black or other additives in binder resin and making granules is used for toner. The processes of preparing the toner are classified largely into a pulverization process and a polymerization process. In the pulverization process, the toner is prepared by melting, and kneading, a synthetic resin and colorant, optionally other additives, and then pulverizing to provide the desired particle size of toner. However, the toner particle prepared by the melt-kneading method which has been known well has wide particle distribution and in irregularly-shaped particle that is, in sharp edge shape. Thus, the toner has a poor chargeability, and flowing capacity.

To resolve such problems, the polymerization for spherical toner was presented. The polymerization process is divided into emulsion polymerization and suspension polymerization. The emulsion polymerization is complicate, thereby producing toner with poor reproducibility of quality. Therefore, the suspension polymerization is in preference to the emulsion polymerization. In the suspension polymerization, a monomer composition is prepared by dissolving or dispersing a monomer, a colorant, a polymerization initiator, and optionally other additives such as a crosslinking agent, and a charge control agent homogeneously, is dispersed aqueous solution of dispersing agent including dispersing-stabilizing agent by using agitator to form small liquid droplet, and then is carried out by suspension polymerization with increase of a temperature to prepare a toner particle with desired size.

US Pat. No. 4,883,735 discloses that in order to improve a poor compatibility and low stability of complex charge control agent containing a metal, a copolymer having a sulfonate group is used as a charge control agent. In addition, JP H02-167565 A1, JP 2000-056518 A1, JP H03-243954 A, JP S63-184762 A1, and JP H03-161761 also disclose a toner including a polymer having a sulfonate group as a charge control agent.

As disclosed in the documents, however, if the polymer is used as charge control agent, the pigments are concentrated on the surface of toners during the polymerization process due to the surface-activeness of pigment, thereby making the chargeability of the toner get worse. In addition, because the polymer charge control agents are adsorbed on the surface of pigments due to large surface area of pigment, there is the reduction in the amount of charge control agents which practically control the charge, thereby reducing the chargeability and charge stability.

### SUMMARY OF THE INVENTION

To resolve the problems in the prior art, it is an object of the present invention to provide a polymerized toner comprising a pigment, a pigment stabilizer, a charge control agent, and a binder resin for obtaining a high chargeability and good charge stability of toner.

It is another object of the present invention to provide a method of the polymerized toner comprising the step of polymerizing a pigment, a pigment stabilizer, a charge control agent, and binder resin monomer.

The present inventors found that when the toner is prepared by suspension polymerization method, the chargeability and charge stability of the toner is reduced by pigments concentrated on the toner surface and the charge control agents adsorbed on the pigment surface. To solve the problems and to effectively prevent concentration of the pigment on the toner surface and decrease of the capability of controlling the charge caused by adsorption of the charge control agent, the present inventors made the present invention completed by using a copolymer with the sulfonate group as a charge control agent, and the block copolymer being capable of effectively adsorbing to the pigment surface as the pigment stabilizer. Thus, the uniform and improved electrification was achieved.

In one embodiment of the invention, the present invention relates to a polymerized toner comprising a pigment, a pigment stabilizer, a charge control agent, and a binder resin, wherein the pigment stabilizer is a styrene-butadiene-styrene block copolymer having the weight-average molecular weight of 2,000 to 200,000 and the styrene content of 10 to 90 wt%, and the charge control agent is a copolymer with sulfonate group having the weight-average molecular weight of 2,000 to 200,000.

In another embodiment, the present invention relates to a method of preparation for a polymerized toner, comprising the step of performing suspension polymerization of a pigment, a pigment stabilizer which is styrene-butadiene-styrene block copolymer having the weight-average molecular weight of 2,000 to 200,000 and the styrene content of 10 to 90 wt%, a charge control agent which a copolymer with the sulfonate group having weight-average molecular weight of 2,000 to 200,000, and a binder resin monomer in the aqueous dispersing solution containing a dispersing agent.

### DETAILED DESCRIPTION OF THE PREFERRED EMBODIMENTS

A more complete appreciation of the invention, and many of the attendant advantages thereof, will be readily apparent as the same becomes better understood by reference to the following detailed description.

The monomer is used for preparing binder resin (hereinafter, referred to as 'binder resin monomer'), and is any monomer which can be used for preparing a toner by polymerization method. The examples of the monomers are styrene-based monomers, acrylate-based monomers, methacrylate-based monomer, diene-based monomers monomer, and a mixture thereof, etc. In addition, the monomer may be optionally used by a mixture of at least one selected from the group consisting of acidic olefin-based monomers and basic olefin-based monomers.

In an embodiment of the invention, the binder resin monomer comprises (a) 30 to 95 parts by weight of a styrene-based monomer; and (b) 5 to 70 parts by weight of one or more monomers selected from the group consisting of acrylate-based monomers, methacrylate-based monomers and diene-based monomers. Optionally, the monomer composition further comprises (c) at least one selected from the group consisting of acidic olefin-based monomers and basic olefin-based monomers in an amount of 0.1 to 30 parts by weight on the basis of 100 parts by weight of total amount of the monomer composition containing (a) and (b).

The styrene-based monomers are styrene, monochlorostyrene, methylstyrene, dimethylstyrene, and the like. The styrene-based monomer can be used in an amount of 30 to 95 parts by weight on the basis of 100 parts by weight of total amount of the monomer composition containing (a) and (b).

The acrylate-based monomers include methylacrylate, ethylacrylate, n-butylacrylate, iso-butylacrylate, dodecylacrylate, 2-ethylhexylacrylate, and etc. The methacrylate-based monomers include methylmethacrylate, ethylmethacrylate, n-butylmethacrylate, iso-butylmethacrylate, dodecylmethacrylate, 2-ethylhexylmethacrylate, and etc. The diene-based monomers are butadiene, and isoprene, etc. At least one selected from the group consisting of acrylate-based monomer, the methacrylate-based monomer, and the diene-based monomers can be used in an amount of 5 to 70 parts by weight on the basis of 100 parts by weight of the monomer composition containing (a) and (b).

The acidic olefin-based monomers are α, β -ethylene compounds having carboxyl group, etc., and the basic olefin-based monomers are methacrylate of aliphatic alcohol having amine group or quaternary ammonium group, methacrylamides, vinylamines, diallylamines or ammonium salts thereof. At least one selected from the acidic and basic olefin-based monomers is used in an amount of 0.1 to 30 parts by weight on the basis of 100 parts by weight of the monomer composition containing (a) and (b).

In another embodiment of the invention, the monomer composition optionally further includes at least one selected from the group consisting of polyester-based polymers, and styrene-acrylate-based polymers in an amount of 0.01 to 10 parts by weight to 100 parts by weight of the monomer composition containing monomer (a), (b), and (c).

The pigment stabilizer is a styrene-butadiene-styrene block copolymer having the weight-average molecular weight of 2,000 to 200,000. Preferably, in the styrene-butadiene-styrene block copolymer, the content of butadiene to styrene may be in a weight ratio of 10-90:90-10. If the content of styrene exceeds 90% by weight, the butadiene block is too short to act as a pigment stabilizer due to high compatibility to the binder resin. If the content of styrene is less than 10% by weight, it can stabilize the pigment sufficiently, but cannot control the interaction of the pigment to the pigment due to the short length of the styrene block. In addition, if the molecular weight of styrene-butadiene-styrene block is smaller than 2,000, it cannot act as a pigment stabilizer due to high compatibility to the binder resin. If the molecular weight of styrene-butadiene-styrene block is larger than 200,000, excessively high viscosity of monomer composition reduce the disperse stability and polymerization stability, thereby make the distribution of the particle size broad. In the present invention, the pigment stabilizer can be used in an amount of 0.1 to 20 parts by weight on the basis of 100 parts by weight of total amount of binder resin monomer.

The charge control agent is a copolymer with the sulfonate group having a weight-average molecular weight of 2,000 to 200,000, and more preferably a copolymer with the sulfonate group having acid value of 1-40 mg KOH/g, and glass transition temperature of 30 °C to 120 °C. If the acid value is less than 1, the copolymer cannot acts as a charge control agent. If the acid value is more than 40, the copolymer affects the interfacial property of the monomer composition, thereby reducing the polymerization stability. In addition, if the glass transition temperature is lower than 30°C, the low glass transition temperature of the charge control agent exposed in toner surface can cause a friction and melting between toners, thereby causing blocking, when printing by using the toner. If the glass transition temperature is high than 120°C, the copolymer make the toner surface excessively hard, thereby reducing the coating property and causing fixing problem. In addition, if the weight-average molecular weight is less than 2,000, the copolymer cannot function as a charge control agent due to its decreased concentration on the toner surface which is caused by high compatibility to the binder resin. If it is higher than 200,000, the high viscosity of the monomer composition has a bad effect on the polymerization stability and the distribution of the particle size.

The examples of charge control agent include one or more copolymer selected from styrene-acrylate-based copolymers with the sulfonate group, and styrene-methacrylate-based copolymers with the sulfonate group, but not limited thereto. In the present invention, the charge control agent can be used in an amount of 0.1 to 20 parts by weight on the basis of 100 parts by weight of total amount of binder resin monomer.

The pigment can be any pigment which is generally used for a polymerized toner, and for examples metal power-type pigments, metal oxide-type pigments, carbon-type pigments, sulfide-type pigments, chromium salt-type pigments, ferrocyanide-type pigments, azo-type pigments, acidic colorant-type pigments, basic colorants-type pigments, mordant colorant-type pigments, phthalocyanine-type pigments, quinacridone-type pigments, dioxane-type pigments, and their mixture. In the present invention, the pigment is used in an amount of 1 to 20 parts by weight on the basis of 100 parts by weight of total amount of binder resin monomer.

According to the present invention, the toner can further include one or more additives selected from the group consisting of a wax, a chain transfer agent, an reaction initiator, a crosslinking agent, a lubricant (for examples, oleic acid, and stearic acid, etc.) and a coupling agent, in addition to the pigment, the pigment stabilizer, the charge control agent and the binder resin monomer.

The wax is at least one selected from the group consisting of refined petroleum waxes such as paraffin waxes, micro-crystalline waxes, and ceresin waxes; natural waxes such as carnauba wax; synthetic waxes selected from the group consisting of polyester-based waxes, polyethylene waxes, polypropylene waxes, and their mixture. In the present invention, the waxes are used in an amount of 0.1 to 30parts by weight on the basis of 100 parts by weight of total amount of binder resin monomer.

The chain transfer agent is at least one selected from the group consisting of *t*-dodecyl mercaptan, n-dodecyl mercaptan, n-octylmercaptan, carbon tetrachloride and carbon tetrabromide. The chain transfer agent can be used in an amount of 0.001 to 8.000 parts by weight on the basis of 100 parts by weight of total amount of binder resin monomer.

The reaction initiators are oil-soluble initiator, and water-soluble initiator. More specifically, the reaction initiators are azo-type initiators such as azobisisobutyronitrile, and azobisvaleronitrile; organic peroxides such as benzoylperoxide, and lauroylperoxide; water-soluble initiators which are generally used such as potassium peroxydisulfate and ammonium peroxydisulfate. The initiators can be used in an amount of 0.01 to 5.00 parts by weight, and more preferably 0.1 to 2.0 parts by weight on the basis of 100 parts by weight of total amount of binder resin monomer.

The crosslinking agent includes divinylbenzene, ethylenedimethacrylate, ethyleneglycol, dimethacrylate, diethylenglycol, diacrylate, 1,6-hexamethylene diacrylate, allylmethacrylate, 1,1,1-trimethylolpropane, triacrylate, triallylamine, tetraallyloxyethane, and the like. The crosslinking agent can be used in an amount of 0.001 to 10 parts by weight on the basis of 100 parts by weight of total amount of binder resin monomer.

In an embodiment of the present invention, the polymerized toner can be prepared to have a structure of a core type, a core-shell type where the shell is polymerized on the core particle, a core-shell-shell type. The another embodiment, the present invention provides a polymerized toner in a core-shell type which includes the core comprising the pigment, the pigment stabilizer, the charge control agent, and the monomer for shell-formation, and the shell formed on the cores by polymerizing a monomer for preparing a shell, a crosslinking agent, and polymerization initiator. The shell can be formed one or more layers. When the polymerized toner is prepared in the core-shell form, decrease of the chargeability due to exposure of the pigment on the surface can be prevented, and the shelf-life of the toner can be extended. Furthermore, the case that the shell is formed in two layers is advantageous for the extended shelf-life because the charge control agent may be located in the second (outer) layer, resulting in increase of the chargeability and decrease of the hygroscopicity, compared with the case that the shell is formed in one layer, wherein the charge control agent is located in the inner layer, resulting in increase of the hygroscopicity as well as the chargeability.

The kinds and amount of monomer for shell-formation can be the binder resin monomer the core-formation, as described above. The binder resin monomer for shell-formation can be the same as or different from that used for core. The amount of the monomer for shell-formation can be decided depending on the number of layers of shell. Preferably, the binder resin monomer for shell-formation can be contained in an amount of 0.01 to 50 parts by weight on the basis of 100 parts by weight of total amount of binder resin monomer for core-formation. The core-shell type toner has better long-term stability than core type toner, because it is cannot agglomerate under the high humidity and temperature. In case that the core-shell-shell type includes the first layer of shell with high charging property, and the second layer provide providing long-term stability, the toner with high charge and long-term stability can be obtained.

In the present invention, the particle size of the toner can be 2-20 *µ*m, preferably 3 to 15 *µ*m, and more preferably 5 to 8 *µ*m.

According to the present invention, the method of preparing the polymerized toner optionally comprises a step of core preparation, or a step of shell preparation on the core. In addition, a post-treatment step can be carried out by at least one step selected from the group consisting of i) a step of removing dispersing agent, ii) a step of washing, filtering, and drying, and iii) a step of surface coating by silica. In the preferred embodiment of the present invention, the method of polymerized toner is explained in detail.

### (1) Preparation of a polymerized toner

An aqueous dispersing solution is prepared by dissolving the dispersing agent in an aqueous solution. The dispersing agent can be at least one selected from the group consisting of inorganic dispersing agents, water-soluble organic polymer dispersing agents, and anionic surfactants, in an amount of 0.1 to 20 parts by weight on the basis of 100 parts by weight of total amount of binder resin monomer.

The examples of inorganic dispersing agents include insoluble calcium salt, insoluble magnesium salt, hydrophilic silica, hydrophobic silica, colloidal silica, and the like. The examples of water-soluble organic polymers are non-ionic polymers such as polyoxyethylene alkylethers, polyoxyalkylene alkylphenolethers, sorbitan fatty acid esters, polyoxyalkylene fatty acid ester, glycerine fatty acid esters, polyvinylalcohol, alkyl cellulose, polyvinylpyrrolidone; and ionic polymer dispersing agents such as polyacrylamide, polyvinylamine, polyvinylamine N-oxide, polyvinylammonium, polydialkylallyl ammonium, polyacrylic acid, polystyrene sulfonic acid, polyacrylate, polystyrene sulfonate and polyaminoalkylacrylate. The anionic surfactants are fatty acid salts, alkylsulfonates, alkylarylsulfonate, dialkylsulfosuccinate and alkyphosphate.

According to an embodiment of the invention, 1 to 60 parts by weight of a composition which contains 100 parts by weight of the binder resin monomers, 1 to 20 parts by weight of pigment, 0.1 to 20 parts by weight of the pigment stabilizer and 0.1 to 20 parts by weight of the polymer charge control agent are dissolved in 100 parts by weight of the aqueous dispersing solution to prepare a mixture solution. Then, the core of polymerized toner is prepared by pressing the mixed solution with shear force with a homogenizer.

Optionally, at least one monomer selected from the group consisting of polyesters and styrene-acryl-based polymers can be added to the monomer composition in an amount of 0.01 to 10 parts by weight.

In an embodiment of the present invention, at least one additive selected from the group consisting of 0.1 to 30parts by weight of waxes, 0.001 to 10parts by weight of crosslinking agents, 0.001∼8parts by weight of chain transfer agents, and 0.01 to 5parts by weight of reaction initiators can be added to the monomer composition, on the basis of 100 parts by weight of total monomer amount.

### (2) Preparation of shell on the core

Optionally, the shell can be formed by forming a shell composition which is prepared by performing the suspension-polymerization of the binder resin monomers for shell-formation, and by coating the shell composition on the core particle, to produce the core-shell type toner. The shell composition can include the binder resin monomer for shell-formation, the crosslinking agent, the initiator and optionally the charge control agent. The monomer for shell-formation can be any monomer which are used for preparing a toner core, and can be the same as or different from the binder resin monomer used for toner core.

The amount of the monomer for shell-formation can be 0.01 to 50 parts by weight on the basis of 100 parts by weight of total amount of monomers used for the toner core. The shell formed on the toner core can consist of at least a layer, and preferably two layers.

### (3) Post-treatment

The resultant solution containing the polymerized toner, or the core-shell type polymerized toner can be performed by the removal of dispersing agent with treatment of acid or alkali, repeating the steps of washing and filtering to separate the toner. The separated toner can be dried in a vacuum oven under the room temperature to obtain toner powder. In an embodiment of the invention, if colloidal silica is used as an aqueous dispersing agent, the silica can be removed from the toner surface by treatment of 0.05 to 0.2 N of aqueous NaOH solution. To prepare the final toner product, the dried toner particle can be further treated by surface treatment of silica.

The image-forming devices which the polymerized toner of the present invention can apply for can comprise a photoconductive drum, a means for charging the surface of photoconductive drum, a means for forming electrostatic latent image on the surface of the photoconductive drum, a means for receiving the toners, a means for developing the latent image and forming the toner image, and a means for transferring the toner image to transfer member.

The polymerized toner of the present invention can apply for a method of forming an image according to the present invention comprises the steps of forming a visible image by adhering the toner to the electrostatic latent image on the photoconductive drum, and transferring the visible image to transfer member.

The present invention is further explained in more detail with reference to the following examples. These examples, however, should not be interpreted as limiting the scope of the present invention in any manner.

### EXAMPLE 1

### 1-1: Preparation of the toner suspension

400g of distilled water and 10g of colloidal silica as a dispersing agent were dissolved in 500 ml reactor, and heated to a reaction temperature of 70 °C to prepare aqueous dispersing solution.

160g of styrene, 36g of butyl acrylate, and 4g of acrylic acid as monomers, 4 g of allylmethacrylate as a crosslinking agent, and 0.02g of n-dodecyl mercaptan as a chain transfer agent were mixed. Then, 2.3g of styrene-acryl-based charge control agent with sulfonate group having the weight-average molecular weight of 10,000g/mole, the glass transition temperature of 59°C and the acid value of 21 mgKOH/g, and 3.5g of styrene-butadiene-styrene symmetric block copolymer as a pigment stabilizer wherein the content of styrene is 30 wt% and the weight-average molecular weight is 70,000 g/mole, were sufficiently dissolved in the obtained mixture. 10g of carbon black was added thereto, stirred with bead mill at 2000rpm for 2 hours. Then, the beads were removed to prepare 105g of the mixture of the monomers and the pigment. The obtained mixture of the monomers and the pigment was put into water bath at 70 °C to be heated. Then, 5g of paraffin wax was added and stirred for 20 minutes to be sufficiently dissolved. To the obtained mixture, 2g of azobisisobutyronitrile as an initiator was added and stirred for 5 minutes.

The obtained reacting mixture was added to the aqueous dispersing solution, stirred with homogenizer at 10,000rpm for 20 minutes, to continue the reaction, and then, stirred with a conventional stirrer at 600rpm for 15 hours, to prepare the toner suspension.

### 1-2: Post-treatment

To the prepared toner suspension, the aqueous solution of NaOH was added and the concentration of NaOH was adjusted to 0.1 N, to remove silica as a dispersing agent from the surface of the toner particles. The aggregates were removed with No.150 mesh, dried, and weighed.

The resulting silica-removed product was repeatedly centrifuged-decanted-redispersed, to remove the dispersing agent and the by-products. Finally, the obtained resulting product was filtrated to remove moisture, and the obtained toner slurry cake was put into a vacuum oven and vacuum dried at room temperature for 48 hours, to prepare the toner powder.

The sizes of the particles of the obtained toner powder were measured with Multisizer™ Coulter Counter, and the shapes of the particles were observed with SEM. The amount of the aggregates was 1.2 wt% based on the theoretical amount of the toner. The volume-average diameter of the obtained toner particles was 7.2 *µ*m and the diameter distribution was 1.8 *µ*m.

As an external additive, 2 parts by weight of surface-treated silica, RY200S, was added to the obtained toner powder, and mixed in the blender at 4000rpm for 3 minutes, to prepare the surface-treated end product. A printing test to the obtained end product was performed with HP4600 printer (Hewlett-Packard), and the image density (ID) was measured with Macbeth (Model No. RD918). The results are shown in the following Table 1.

### Examples 2 to 5: Pigment stabilizer-controlled toner

The polymerization was performed and the silica used a dispersing agent was removed from the surface of the toner particles, with the substantially same method with Example 1, except that the block ratio (wt% of styrene) of the styrene-butadiene-styrene block copolymer used as a pigment stabilizer was varied as presented in the following Table 1. The aggregates were removed with No. 150 mesh, dried and the amount thereof was measured. The amount of the aggregates was about 1 to 2 wt% based on the amount of the toner.

From the resulting silica-removed product, the toner slurry cake, the toner powder and the end product were prepared by the substantially same method with Example 1. The size of the obtained toner particles ranged from 6.8 *µ*m to 7.5 *µ*m. A printing test to the obtained toner was performed and the image density thereof was measured. The results are shown in the following Table 1.

### Examples 6 to 10: Charge control agent-controlled toner

The polymerization was performed and the silica used a dispersing agent was removed from the surface of the toner particles, with the substantially same method with Example 1, except that the styrene-butadiene-styrene block copolymer having the block ratio (wt% of styrene) of 30 wt% and the weight-average molecular weight of 70,000 g/mole was used as a pigment stabilizer, and the molecular weight, the acid value and the glass transition temperature of the charge control agent with sulfonate group were varied as presented in the following Table 1. The aggregates were removed with No. 150 mesh, dried and the amount thereof was measured. The amount of the aggregates was about 1 to 2 wt% based on the amount of the toner.

From the resulting silica-removed product, the toner slurry cake, the toner powder and the end product were prepared by the substantially same method with Example 1. The size of the obtained toner particles ranged from 6.8 *µ*m to 7.5 *µ*m. A printing test to the obtained toner was performed and the image density thereof was measured. The results are shown in the following Table 1.

### Comparative Example 1

### Preparation of toner without using the pigment stabilizer

The polymerization was performed and the silica used a dispersing agent was removed from the surface of the toner particles, with the substantially same method with Example 1, except that the polymerization was performed without the styrene-butadiene-styrene block copolymer as a pigment stabilize. The aggregates were removed with No. 150 mesh, dried and the amount thereof was measured. The amount of the aggregates was about 1.5 wt% based on the amount of the toner.

From the resulting silica-removed product, the toner slurry cake, the toner powder and the end product were prepared by the substantially same method with Example 1. A printing test to the obtained toner was performed and the image density thereof was measured. The results are shown in the following Table 1.

### Comparative Example 2

### Preparation of toner using styrene-butadiene-styrene block copolymer having the content of styrene of 95 wt%

The polymerization was performed and the silica used a dispersing agent was removed from the surface of the toner particles, with the substantially same method with Example 1, except that the styrene-butadiene-styrene block copolymer having the block ratio (wt% of styrene) of 95 wt% and the weight-average molecular weight of 120,000 g/mole was used as a pigment stabilizer. The aggregates were removed with No. 150 mesh, dried and the amount thereof was measured. The amount of the aggregates was about 35 wt% based on the amount of the toner.

From the resulting silica-removed product, the toner slurry cake, the toner powder and the end product were prepared by the substantially same method with Example 1. A printing test to the obtained toner was performed and the image density thereof was measured. The results are shown in the following Table 1.

### Comparative Example 3

### Preparation of toner using styrene-butadiene-styrene block copolymer having the content of styrene of 5 wt%

The polymerization was performed and the silica used a dispersing agent was removed from the surface of the toner particles, with the substantially same method with Example 1, except that the styrene-butadiene-styrene block copolymer having the block ratio (wt% of styrene) of 5 wt% and the weight-average molecular weight of 56,000 g/mole was used as a pigment stabilizer. The aggregates were removed with No. 150 mesh, dried and the amount thereof was measured. The amount of the aggregates was about 2.0 wt% based on the amount of the toner.

From the resulting silica-removed product, the toner slurry cake, the toner powder and the end product were prepared by the substantially same method with Example 1. A printing test to the obtained toner was performed and the image density thereof was measured. The results are shown in the following Table 1.

**[Table 1]**

| **Sample No.** | **Styrene-Butadiene-Styrene** | | | **Charge Control Agent** | | | | **ID** | |
|---|---|---|---|---|---|---|---|---|---|
| | **Content of Styrene (wt%)** | **Molecular Weight (g/mole)** | **Amount (wt%)** | **Molecular Weight (g/mole)** | **Acid Value (mgKOH/g)** | **T_{g} (C)** | **Amount (wt%)** | **I Page** | **200 Pages** |
| **Example 1** | 30 | 70,000 | 1.5 | 10,000 | 21 | 59 | 1.0 | 1.45 | 1.42 |
| **Example 2** | 10 | 75,000 | 1.5 | 10,000 | 21 | 59 | 1.0 | 1.42 | 1.39 |
| **Example 3** | 20 | 72,000 | 1.5 | 10,000 | 21 | 59 | 1.0 | 1.43 | 1.43 |
| **Example 4** | 50 | 67,000 | 1.5 | 10,000 | 21 | 59 | 1.0 | 1.39 | 1.33 |
| **Example 5** | 70 | 100,000 | 1.5 | 10,000 | 21 | 59 | 1.0 | 1.38 | 1.32 |
| **Example 6** | 30 | 70,000 | 1.5 | 12,000 | 5 | 57 | 1.0 | 1.30 | 1.27 |
| **Example 7** | 30 | 70,000 | 1.5 | 11,500 | 36 | 57 | 1.0 | 1.46 | 1.42 |
| **Example 8** | 30 | 70,000 | 1.5 | 22,000 | 11 | 62 | 1.0 | 1.35 | 1.33 |
| **Example 9** | 30 | 70,000 | 1.5 | 124,000 | 23 | 61 | 1.0 | 1.46 | 1.44 |
| **Example10** | 30 | 70,000 | 1.5 | 4,800 | 15 | 57 | 1.0 | 1.32 | 1.30 |
| **Comp. Exam.1** | - | - | 0 | 10,000 | 21 | 59 | 1.0 | 1.20 | 0.89 |
| **Comp. Exam. 2** | 95 | 120,000 | 1.5 | 10,000 | 21 | 59 | 1.0 | 1.35 | 1.29 |
| **Comp.Exam.3** | 5 | 56,000 | 1.5 | 10,000 | 21 | 59 | 1.0 | 1.37 | 1.21 |

As shown in Table 1, in Comparative Example 1 wherein the styrene-butadiene-styrene block copolymer as pigment stabilize was not used, the developing property that the image density was not maintained to be remarkably reduced at 200 pages was exhibited. Further, as known from Comparative Example 2, in case that the content of the styrene in the styrene-butadiene-styrene copolymer is 95% or more, there are several problems that the adsorption of the copolymer to the surface of the pigment is insufficient due to the short length of the butadiene block, thereby reducing the charge stability, and the copolymer which is not adsorbed to the surface of the pigment affects the interface property of the toner, thereby reducing the polymerization stability and generating aggregates in a large amount. In addition, as known from Comparative Example 3, in case that the content of the styrene in the styrene-butadiene-styrene copolymer is 5% or less, although the polymerization stability is good, there is a problem that the interaction between the pigments is not sufficiently blocked due to the short length of the styrene block, to generate the aggregation of the pigments, thereby the charge property being deteriorated with time.

As known from the foregoing, in Examples 1 to 10 of the present invention, the block ratio in the styrene-butadiene-styrene copolymer and/or the property of the charge control agent with sulfonate group are appropriately controlled, to prepare the toner having the high chargeability and good charge-stability.

As aforementioned, the present invention provides a useful polymerized toner having a high chargeability and a good charge stability, by using a styrene-butadiene-styrene block copolymer as a pigment stabilizer, and by appropriately controlling a charge control agent with sulfonate group, to prevent a reduction of the chargeability due to the concentration of the pigment at the surface of the toner, thereby securing a high chargeability and a geed charge stability compared with the conventional polymerized toner.

## Claims

1. A polymerized toner comprising a pigment, a pigment stabilizer, a charge control agent, and a binder resin,
wherein the pigment stabilizer is a styrene-butadiene-styrene block copolymer having the weight-average molecular weight of 2,000 to 200,000 and the styrene content of 10 to 90 wt%, and the charge control agent is a copolymer with sulfonate group having the weight-average molecular weight of 2,000 to 200,000.

2. The polymerized toner according to Claim 1, wherein the charge control agent is the copolymer with sulfonate group which have the acid value of 1 to 40 mg KOH/g, and the glass transition temperature of 30°C to 120°C.

3. The polymerized toner according to Claim 1, wherein the charge control agent is one or more selected from the group consisting of styrene-acryl-based copolymers with the sulfonate group and styrene-methacryl-based copolymers with the sulfonate group.

4. The polymerized toner according to Claim 1, wherein the amount of the pigment stabilizer is 0.1 to 20 parts by weight, and the amount of the charge control agent is 0.1 to 20 parts by weight, respectively based on 100 parts by weight of the total amount of the binder resin.

5. The polymerized toner according to Claim 1, wherein the binder resin is prepared from one or more binder resin monomer selected from the group consisting of styrene-based monomers, acrylate-based monomers, methacrylate-based monomers, and diene-based monomers.

6. The polymerized toner according to Claim 5, wherein the binder resin monomer comprises (a) 30 to 95 parts by weight of a styrene-based monomer; and (b) 5 to 70 parts by weight of one or more monomers selected from the group consisting of acrylate-based monomers, methacrylate-based monomers and diene-based monomers.

7. The polymerized toner according to Claim 6, wherein the binder resin monomer further comprises (c) 0.1 to 30 parts by weight of one or more monomers of acidic olefin-based monomers and basic olefin-based monomers, based on 100 parts by weight of the total amount of monomers (a) and (b).

8. The polymerized toner according to Claim 1, wherein the pigment is one or more selected from the group consisting of metal power-type pigments, metal oxide-type pigments, carbon-type pigments, sulfide-type pigments, chromium salt-type pigments, ferrocyanide-type pigments, azo-type pigments, acidic colorant-type pigments, basic colorants-type pigments, mordant colorant-type pigments, phthalocyanine-type pigments, quinacridone-type pigments and dioxane-type pigments.

9. The polymerized toner according to Claim 1, wherein the amount of the pigment is 1 to 20 parts by weight, the amount of the pigment stabilizer is 0.1 to 20 parts by weight, and the amount of the charge control agent is 0.1 to 20 parts by weight, respectively based on 100 parts by weight of the total amount of the binder resin.

10. The polymerized toner according to Claim 1, wherein the polymerized toner further comprises one or more selected from the group consisting of a wax, a chain transfer agent, an initiator, a crosslinking agent, a lubricant and a coupling agent.

11. The polymerized toner according to Claim 10, wherein the wax is selected from the group consisting of paraffin waxes, micro-crystalline waxes, cerecine waxes, polyester waxes, polyethylene waxes and polypropylene waxes.

12. The polymerized toner according to Claim 10, wherein the chain transfer agent is one or more selected from the group consisting of *t*-dodecyl mercaptan, n-dodecyl mercaptan, n-octylmercaptan, carbon tetrachloride and carbon tetrabromide.

13. The polymerized toner according to any one of Claims 1 to 9, comprising a core particle containing the pigment, the pigment stabilizer, the charge control agent and the binder resin, and a shell formed on the surface of the core particle by polymerization of a monomer for shell-formation, a crosslinking agent and a polymerization initiator.

14. The polymerized toner according to Claim 13, wherein the shell consists of two layers.

15. The polymerized toner according to Claim 13, wherein the monomer for shell-formation is the same as or different from the binder resin monomer and is one or more selected from styrene-based monomers, acrylate-based monomers, methacrylate-based monomers and diene-based monomers in an amount of 0.01 to 50 parts by weight based on the total amount of the binder resin monomer.

16. A method of preparation for a polymerized toner, comprising the step of performing suspension polymerization of a pigment, a pigment stabilizer, a charge control agent and a binder resin monomer, which are defined in any one of Claims 1 to 12, in the aqueous dispersing agent solution, to prepare toner particles.

17. The method according to Claim 16, wherein the dispersing agent is one or more selected from the group consisting of inorganic dispersing agents, water-soluble organic polymeric dispersing agents and anionic surfactants.

18. A method of preparation for a polymerized toner, comprising the steps of:
performing suspension polymerization of the pigment, the pigment stabilizer, the charge control agent and the binder resin monomer, which are defined in any one of Claims 1 to 12, in the aqueous dispersing agent solution, to prepare toner core particles; and
performing suspension polymerization of monomers for shell-formation in the present of the toner core particles, to form a shell consisting of one or more layers on the surface of the toner core particles.

19. The method according to Claim 18, wherein the dispersing agent is one or more selected from the group consisting of inorganic dispersing agents, water-soluble organic polymeric dispersing agents and anionic surfactants.

20. A method to improve chargeability and charge-stability of a polymerized toner, by using a pigment, a binder resin monomer, a styrene-butadiene-styrene block copolymer having the weight-average molecular weight of 2,000 to 200,000 and a styrene content of 10 to 90 wt.% as a pigment stabilizer, and a copolymer with sulfonate groups having the weight-average molecular weight of 2,000 to 200,000 as a charge control agent, in preparing the polymerized toner.

## Patentansprüche

1. Polymerisierter Toner, der ein Pigment, einen Pigmentstabilisierer, ein Ladungskontrollmittel und ein Bindeharz umfasst,
wobei der Pigmentstabilisierer ein Styrol-Butadiene-Styrol Blockcopolymer mit einem gewichtsgemittelten Molekulargewicht von 2.000 bis 200.000 ist und einem Styrolgehalt von 10 bis 90 Gew.% ist, und das Ladungskontrollmittel ein Copolymer mit Sulfonatgruppe mit einem gewichtsgemittelten Molekulargewicht von 2.000 bis 200.000 ist.

2. Polymerisierter Toner gemäß Anspruch 1, worin das Ladungskontrollmittel das Copolymer mit Sulfonatgruppe ist, welches einen Säurewert von 1 bis 40 mg KOH/g hat, und die Glasübergangtemperatur von 30°C bis 120°C ist.

3. Polymerisierter Toner gemäß Anspruch 1, worin das Ladungskontrollmittel eines oder mehrere ist/sind, das/die aus der Gruppe ausgewählt ist/sind, die aus Styrol-Acryl basierten Copolymeren mit der Sulfonatgruppe und Styrol-Methacryl basierten Copolymeren mit der Sulfonatgruppe bestehen.

4. Polymerisierter Toner gemäß Anspruch 1, worin die Menge des Pigmentstabilisierers 0,1 bis 20 Gew.-Teile ist, und die Menge des Ladungskontrollmittels 0,1 bis 20 Gew.-Teile ist, jeweils bezogen auf 100 Gew.-Teile der gesamten Menge des Bindemittelharzes.

5. Polymerisierter Toner gemäß Anspruch 1, worin das Bindeharz hergestellt wird aus einem oder mehreren Bindemittelharzmonomeren, die aus der Gruppe ausgewählt sind, die aus Styrol-basierten Monomeren, Acrylat-basierten Monomeren, Methacrylat-basierten Monomeren und Dien-basierten Monomeren besteht.

6. Polymerisierter Toner gemäß Anspruch 5, worin das Bindemittelharz-Monomer (a) 30 bis 95 Gew.-Teile eines Styrol-basierten Monomers; und (b) 5 bis 70 Gew.-Teile von einem oder mehreren Monomeren umfasst, die aus der Gruppe ausgewählt sind, die aus Acrylat-basierten Monomeren, Methacrylat-basierten Monomeren und Dienebasierten Monomeren besteht.

7. Polymerisierter Toner gemäß Anspruch 6, worin das Bindemittelharz-Monomer darüber hinaus (c) 0,1 bis 30 Gew.-Teile von einem oder mehreren Monomeren aus sauren Olefin-basierten Monomeren und basischen Olefin-basierten Monomeren umfasst, bezogen auf 100 Gew.-Teile der gesamten Menge der Monomere (a) und (b).

8. Polymerisierter Toner gemäß Anspruch 1, worin das Pigment eines oder mehrere ist, das/die aus der Gruppe ausgewählt ist/sind, die aus Pigmenten vom Metallpulvertyp, Pigmenten vom Metalloxidtyp, Pigmenten vom Kohlenstofftyp, Pigmenten vom Sulfidtyp, Pigmenten vom Chromsalztyp, Pigmenten vom Eisencyanidtyp, Pigmenten vom Azotyp, Pigmenten vom sauren Färbemitteltyp, Pigmenten vom basischen Färbemitteltyp, Pigmenten vom Beizmitteltyp, Pigmenten vom Phthalocyanintyp, Pigmenten vom Chinacridontyp und Pigmenten vom Dioxantyp besteht.

9. Polymerisierter Toner gemäß Anspruch 1, worin die Menge an Pigment 1 bis 20 Gew.-Teile, die Menge an Pigmentstabilisierer 0,1 bis 20 Gew.-Teile und die Menge an Ladungskontrollmittel 0,1 bis 20 Gew.-Teile ist, jeweils bezogen auf 100 Gew.-Teile der gesamten Menge des Bindemittelharzes.

10. Polymerisierter Toner gemäß Anspruch 1, worin der polymerisierte Toner darüber hinaus einen oder mehrere umfasst, die aus der Gruppe ausgewählt sind, die aus Wachs, einem Kettentransfermittel, einem Initiator, einem Vernetzungsmittel, einem Schmiermittel und einem Kupplungsmittel besteht.

11. Polymerisierter Toner gemäß Anspruch 10, worin das Wachs aus der Gruppe ausgewählt ist, die aus Paraffinwachsen, mikrokristallinen Wachsen, Cerecinwachsen, Polyesterwachsen, Polyethylenwachsen und Polypropylenwachsen besteht.

12. Polymerisierter Toner gemäß Anspruch 10, worin das Kettentransfermittel eines oder mehrere ist, das/die aus der Gruppe ausgewählt ist/sind, die aus t-Dodecyl-Mercaptan, n-Dodecyl-Mercaptan, n-Octylmercaptan, Kohlenstofftetrachlorid und Kohlenstofftetrabromid besteht.

13. Polymerisierter Toner gemäß irgendeinem der Ansprüche 1 bis 9, der ein Kernpartikel, welches das Pigment, den Pigmentstabilisierer, das Ladungskontrollmittel und das Bindemittelharz enthält, und eine Schale umfasst, die auf der Oberfläche des Kernpartikels durch Polymerisation eines Monomers für die Schalenbildung, einem Vernetzungsmittel und einem Polymerisationsinitiator gebildet ist.

14. Polymerisierter Toner gemäß Anspruch 13, worin die Schale aus zwei Schichten besteht.

15. Polymerisierter Toner gemäß Anspruch 13, worin das Monomer für die Schalenbildung dasselbe oder unterschiedlich von dem Bindemittelharz-Monomer ist und eines oder mehrere ist, das/die aus Styrol-basierten Monomeren, Acrlyat-basierten Monomeren, Methacrylat-basierten Monomeren und Dien-basierten Monomeren ausgewählt ist, in einer Menge von 0,01 bis 50 Gew.-Teile bezogen auf die gesamte Menge des Bindemittelharz-Monomers.

16. Verfahren zur Herstellung eines polymerisierten Toners, das den Schritt der Durchführung einer Suspensionspolymerisation eines Pigments, eines Pigmentstabilisierers, eines Ladungskontrollmittels und eines Bindemittelharz-Monomers, welche wie in irgendeinem der Ansprüche 1 bis 12 definiert sind, in der wässrigen Dispersionsmittellösung umfasst, um Tonerpartikel herzustellen.

17. Verfahren gemäß Anspruch 16, worin das Dispersionsmittel eines oder mehrere ist, das aus der Gruppe ausgewählt ist, die aus anorganischen Dispersionsmitteln, wasserlöslichen, organischen, polymerischen Dispersionsmitteln und anionischen Tensiden besteht.

18. Verfahren für die Herstellung eines polymerisierten Toners, das die Schritte umfasst:
Durchführen einer Suspensionspolymerisation des Pigments, des Pigmentstabilisierers, des Ladungskontrollmittels und des Bindemittelharzes, welche wie in irgendeinem der Ansprüche 1 bis 12 definiert sind, in der wässrigen Dispersionsmittellösung, um Tonerkernpartikel herzustellen; und
Durchführen einer Supensionspolymerisation der Monomere für die Schalenbildung in der Gegenwart der Tonerkernpartikel, um eine aus einer oder mehreren Schichten bestehende Schale auf der Oberfläche der Tonerkernpartikel zu bilden.

19. Verfahren gemäß Anspruch 18, worin das Dispersionsmittel eines oder mehrere ist, das aus der Gruppe ausgewählt ist, die aus anorganischen Dispersionsmitteln, wasserlöslichen organischen polymerischen Dispersionsmitteln und anionischen Tensiden besteht.

20. Verfahren zur Verbesserung der Ladungsfähigkeit und Ladungstabilität eines polymerisierten Toners, durch Verwendung eines Pigments, eines Bindemittelharz-Monomers, eines Styrol-Butadien-Styrol Blockcopolymers mit einem gewichtsgemittelten Molekulargewicht von 2.000 bis 200.000 und einem Styrolgehalt von 10 bis 90 Gew.% als Pigmentstabilisierer, und eines Copolymers mit Sulfonatgruppen mit einem gewichtsgemittelten Molekulargewicht von 2.000 bis 200.000 als Ladungskontrollmittel, in der Herstellung des polymerisierten Toners.

## Revendications

1. Toner polymérisé comprenant un pigment, un stabilisateur de pigment, un agent de contrôle de charge, et une résine de liaison,
dans lequel le stabilisateur de pigment est un copolymère blocs styrène-butadiène-styrène ayant le poids moléculaire moyen en poids de 2 000 à 200 000 et la teneur en styrène de 10 à 90% en poids, et l'agent de contrôle de charge est un copolymère avec un groupe sulfonate ayant le poids moléculaire moyen en poids de 2 000 à 200 000.

2. Toner polymérisé selon la revendication 1, dans lequel l'agent de contrôle de charge est le copolymère avec un groupe sulfonate qui a l'indice d'acide de 1 à 40 mg KOH/g, et la température de transition vitreuse de 30°C à 120°C.

3. Toner polymérisé selon la revendication 1, dans lequel l'agent de contrôle de charge est un ou plusieurs choisi(s) parmi le groupe consistant en des copolymères à base de styrène-acrylique avec le groupe sulfonate et des copolymères à base de styrène-méthacrylique avec le groupe sulfonate.

4. Toner polymérisé selon la revendication 1, dans lequel la quantité du stabilisateur de pigment est 0,1 à 20 partie(s) en poids, et la quantité de l'agent de contrôle de charge est 0,1 à 20 partie(s) en poids, respectivement sur la base de 100 parties en poids de la quantité totale de la résine de liaison.

5. Toner polymérisé selon la revendication 1, dans lequel la résine de liaison est préparée à partir d'un ou plusieurs monomère(s) de résine de liaison choisi(s) parmi le groupe consistant en des monomères à base de styrène, des monomères à base d'acrylate, des monomères à base de méthacrylate, et des monomères à base de diène.

6. Toner polymérisé selon la revendication 5, dans lequel le monomère de résine de liaison comprend (a) 30 à 95 parties en poids d'un monomère à base de styrène ; et (b) 5 à 70 parties en poids d'un ou plusieurs monomère(s) choisi(s) parmi le groupe consistant en des monomères à base d'acrylate, des monomères à base de méthacrylate, et des monomères à base de diène.

7. Toner polymérisé selon la revendication 6, dans lequel le monomère de résine de liaison comprend en outre (c) 0,1 à 30 partie(s) en poids d'un ou plusieurs monomère(s) parmi des monomères acides à base d'oléfine et des monomères basiques à base d'oléfine, sur la base de 100 parties en poids de la quantité totale de monomères (a) et (b).

8. Toner polymérisé selon la revendication 1, dans lequel le pigment est un ou plusieurs choisi(s) parmi le groupe consistant en des pigments de type poudre métallique, des pigments de type oxyde métallique, des pigments de type carbone, des pigments de type sulfure, des pigments de type sel de chrome, des pigments de type ferrocyanure, des pigments de type azo, des pigments de type colorant acide, des pigments de type colorants basiques, des pigments de type colorant à mordant, des pigments de type phtalocyanine, des pigments de type quinacridone et des pigments de type dioxane.

9. Toner polymérisé selon la revendication 1, dans lequel la quantité du pigment est 1 à 20 partie (s) en poids, la quantité du stabilisateur de pigment est 0,1 à 20 partie(s) en poids, et la quantité de l'agent de contrôle de charge est 0,1 à 20 partie(s) en poids, respectivement sur la base de 100 parties en poids de la quantité totale de la résine de liaison.

10. Toner polymérisé selon la revendication 1, dans lequel le toner polymérisé comprend en outre un ou plusieurs choisi(s) parmi le groupe consistant en une cire, un agent de transfert de chaîne, un initiateur, un agent de réticulation, un lubrifiant et un agent de couplage.

11. Toner polymérisé selon la revendication 10, dans lequel la cire est choisie parmi le groupe consistant en des cires de paraffine, des cires microcristallines, des cires de cérésine, des cires de polyester, des cires de polyéthylène et des cires de polypropylène.

12. Toner polymérisé selon la revendication 10, dans lequel l'agent de transfert de chaîne est un ou plusieurs choisi(s) parmi le groupe consistant en le t-dodécylmercaptan, le n-dodécylmercaptan, le n-octylmercaptan, le tétrachlorure de carbone et le tétrabromure de carbone.

13. Toner polymérisé selon l'une quelconque des revendications 1 à 9, comprenant une particule noyau contenant le pigment, le stabilisateur de pigment, l'agent de contrôle de charge et la résine de liaison, et une enveloppe formée sur la surface de la particule noyau par polymérisation d'un monomère pour formation d'enveloppe, d'un agent de réticulation et d'un initiateur de polymérisation.

14. Toner polymérisé selon la revendication 13, dans lequel l'enveloppe consiste en deux couches.

15. Toner polymérisé selon la revendication 13, dans lequel le monomère pour formation d'enveloppe est identique au ou différent du monomère de résine de liaison et est un ou plusieurs choisi(s) parmi des monomères à base de styrène, des monomères à base d'acrylate, des monomères à base de méthacrylate, et des monomères à base de diène dans une quantité de 0,01 à 50 partie(s) en poids sur la base de la quantité totale du monomère de résine de liaison.

16. Procédé de préparation d'un toner polymérisé, comprenant l'étape d'exécution d'une polymérisation en suspension d'un pigment, d'un stabilisateur de pigment, d'un agent de contrôle de charge et d'un monomère de résine de liaison, qui sont définis selon l'une quelconque des revendications 1 à 12, dans la solution aqueuse d'agent de dispersion, pour préparer des particules de toner.

17. Procédé selon la revendication 16, dans lequel l'agent de dispersion est un ou plusieurs choisi(s) parmi le groupe consistant en des agents de dispersion inorganiques, des agents de dispersion polymériques organiques solubles dans l'eau et des agents tensioactifs anioniques.

18. Procédé de préparation d'un toner polymérisé, comprenant les étapes de :
exécution d'une polymérisation en suspension du pigment, du stabilisateur de pigment, de l'agent de contrôle de charge et du monomère de résine de liaison, qui sont définis selon l'une quelconque des revendications 1 à 12, dans la solution aqueuse d'agent de dispersion, pour préparer des particules noyaux de toner ; et
exécution d'une polymérisation en suspension de monomères pour formation d'enveloppe en présence des particules noyaux de toner, pour former une enveloppe consistant en une ou plusieurs couche(s) sur la surface des particules noyaux de toner.

19. Procédé selon la revendication 18, dans lequel l'agent de dispersion est un ou plusieurs choisi(s) parmi le groupe consistant en des agents de dispersion inorganiques, des agents de dispersion polymériques organiques solubles dans l'eau et des agents tensioactifs anioniques.

20. Procédé d'amélioration d'une capacité de charge et d'une stabilité de charge d'un toner polymérisé, en utilisant un pigment, un monomère de résine de liaison, un copolymère blocs styrène-butadiène-styrène ayant le poids moléculaire moyen en poids de 2 000 à 200 000 et une teneur en styrène de 10 à 90% en poids comme un stabilisateur de pigment, et un copolymère avec des groupes sulfonate ayant le poids moléculaire moyen en poids de 2 000 à 200 000 comme un agent de contrôle de charge, lors de la préparation du toner polymérisé.
